# EUROPÄISCHE PATENTSCHRIFT

(11) **EP 2 600 503 B1**
(45) Veröffentlichungstag und Bekanntmachung des Hinweises auf die Patenterteilung: **13.02.2019**
(21) Anmeldenummer: 11009558.5
(22) Anmeldetag: 02.12.2011
(51) Int. Cl.: H02K 5/14, H01R 39/39, H02K 13/10

(54) **Bürstendeckel für einen bürstenkommutierten Elektromotor und Elektromotor**
Brush support for a brush commuted electric motor and electric motor
Couvercle pour balais destiné à un moteur électrique à collecteur et moteur électrique

(43) Veröffentlichungstag der Anmeldung: 05.06.2013
(73) Patentinhaber: Lakeview Innovation Ltd., 6374 Buochs (CH)
(72) Erfinder: Teimel, Arnold, 6074 Giswil (CH); Walker, Reto, 6010 Kriens (CH); Uhlich, Dirk, 6064 Kerns (CH)
(74) Vertreter: Grünecker Patent- und Rechtsanwälte PartG mbB

(56) Entgegenhaltungen:
- EP-A1- 1 598 922
- EP-A2- 1 808 942
- FR-A- 1 248 501

## Beschreibung

Die Erfindung betrifft einen Bürstendeckel für einen bürstenkommutierten Elektromotor nach dem Oberbegriff des unabhängigen Anspruchs 1. Ein derartiger gattungsgemäßer Bürstendeckel umfasst zumindest eine Hebelbürste, die am Bürstendeckel um eine Achse drehbar gelagert ist. Für die drehbare Lagerung ist ein Bolzen vorgesehen, der zumindest abschnittsweise von zumindest einer Dämpfungshülse aus einem Elastomer umgeben ist.

Bei Elektromotoren, die mit Gleichstrom betrieben werden, ist, sofern es sich bei dem Rotor des Elektromotors nicht um einen Permanentmagnetläufer handelt, auf der Welle des Rotors ein Kommutator vorgesehen, der dafür sorgt, dass die verschiedenen Rotorwicklungen abwechselnd zur richtigen Zeit mit Strom beaufschlagt werden. Der Kollektor des Kommutators ist an seiner Mantelfläche mit einer Vielzahl von Lamellen bestückt, die über den Umfang des Kollektors verteilt sind und in der Regel mit zwei Kohle- bzw. Graphitbürsten oder Stahlbürsten abwechselnd in schleifendem Kontakt stehen. An den Bürsten liegt die bereitgestellte Gleichspannung an. Die Rotorspulen sind jeweils elektrisch an ein Lamellenpaar des Kollektors angeschlossen. Die Drehung des Rotors führt dazu, dass jeweils unterschiedliche Lamellenpaare des Kollektors mit den beiden Bürsten in Kontakt kommen, so dass immer wieder eine andere Rotorspule mit Strom beaufschlagt wird.

Um einen guten Kontakt zwischen den Bürsten und den Lamellen des Kollektors zu gewährleisten, sind die Bürsten im Elektromotor gegen die Lamellen des Kollektors vorgespannt gelagert. Da Kohle- bzw. Graphitbürsten mit der Zeit verschleißen, müssen diese auch ständig nachgeführt werden. Die Bürsten müssen daher speziell im Elektromotor gelagert werden. Aus dem Stand der Technik sind zwei verschiedene Arten von Bürstendeckel für bürstenkommutierte Elektromotoren bekannt. Eine bekannte Ausführung wird als sogenannter Köcherbürstendeckel bezeichnet. Bei Köcherbürsten handelt es sich um Graphitstäbe, die in Schächten, sogenannten Köchern, geführt werden und mittels einer Druckfeder in Richtung auf die Mantelfläche des Kollektors vorgespannt sind. Die Schächte bzw. Köcher, in welchen die Köcherbürsten geführt sind, verlaufen radial von Außen auf die Mantelfläche des Kollektors zu. Sie sind Teil des Bürstendeckels, der zumeist als separates Bauteil des Elektromotors vorgesehen ist. Er kann jedoch auch einstückig mit dem Gehäuse des Elektromotors ausgeführt sein.

Anstatt der bekannten Köcherbürsten kann der Bürstendeckel auch mit einer zweiten bekannten Art von Bürsten, nämlich sogenannten Hebelbürsten, bestückt sein. Hebelbürsten sind, ähnlich wie manche Tonarme von Plattenspielern, hakenförmig ausgebildet und drehbar am Bürstendeckel angelenkt. Aufgrund der Hakenform werden Hebelbürsten auch als Schneckenbürsten bezeichnet. Das freie Ende der hakenförmigen Hebelbürste liegt am Kollektoraußenumfang an und ist gegen diesen vorgespannt. Dazu ist eine entsprechende Feder vorgesehen, die verschieden ausgeführt sein kann. Die drehbare Lagerung am Bürstendeckel ist in der Regel mittels eines Bolzens, also mittels eines kurzen Wellenstücks, realisiert. Der Bolzen kann am Bürstendeckel angespritzt oder auch in eine entsprechende Bohrung des Bürstendeckels eingepresst sein. Auch eine drehbare Lagerung des Bolzens im Bürstendeckel ist möglich. Hebel- bzw Schneckenbürsten ermöglichen aufgrund ihrer Form bei gleicher Motorgröße eine größere Verschleißlänge als Köcherbürsten und bieten daher bei Motoren mit kleinem Durchmesser deutliche Vorteile in Punkto Lebensdauer.

Der Kollektor eines Elektromotors ist in der Regel äußerst präzise unter Einhaltung sehr geringer Durchmesser- und Rundlauftoleranzen gefertigt. Dennoch führen geringe Rundlauffehler des Kollektors und kleinste Absätze an den Übergängen zwischen den Kollektorlamellen zu einer periodischen Auslenkung der Bürsten gegen die Federkraft. Dadurch kommt es zu Vibrationen, die von den Bürsten über den Bürstendeckel auf weitere Teile des Motors übertragen und von diesen Motorteilen als Schall abgestrahlt werden. Die resultierende Geräuschentwicklung ist bei vielen Anwendungen unerwünscht. Eine Möglichkeit, die Geräuschentwicklung zu reduzieren, ist es, die übertragenden Teile möglichst steif und massereich auszuführen. Dies betrifft vor allen Dingen den Bürstendeckel, an dem die Bürsten gelagert sind. Nachteilig an dieser Maßnahme ist der zusätzlich benötigte Bauraum, sowie ein hohes Gewicht und erhöhte Kosten bei der Fertigung des Elektromotors.

Aus DE 3311271 A1 ist ein Bürstendeckel mit Köcherbürsten bekannt, bei dem die unterwünschte Geräuschentwicklung durch den Einsatz gummiartig elastischer Einsätze verhindert werden soll. Die Bürsten sind in hohlwandigen Köchern geführt, die ihrerseits wiederum jeweils in einem Schacht des Bürstendeckels gelagert sind. Der gummiartig elastische Einsatz befindet sich zwischen dem Schacht und dem darin angeordneten hohlwandigen Köcher. Eine mögliche Lösung, wie die unerwünschte Geräuschentwicklung bei Bürstendeckeln mit Hebelbürsten verhindert werden kann, ist in der DE 3311271 A1 nicht angegeben.

Ein weiterer Bürstendeckel, der ebenfalls für die Aufnahme von Köcherbürsten ausgebildet ist, ist aus EP 1528656 A1 bekannt. Um die Übertragung von Vibrationen zu verhindern, ist der Bürstendeckel zweiteilig ausgeführt, wobei zwischen dem Teil des Bürstendeckels, in dem die Köcherbürsten gelagert sind, und dem Teil des Bürstendeckels, der mit dem Gehäuse des Elektromotors verbunden ist, mehrere Dämpfungselemente vorgesehen sind. Die schwingungsentkoppelte zweiteilige Ausführung des Bürstendeckels ist theoretisch auch auf Bürstendeckel mit Hebel- bzw. Schneckenbürsten übertragbar. Allerdings erfordert dieser Aufbau ein relativ großes Bauvolumen. Zudem sind sowohl Fertigung als auch Montage teuer und aufwendig.

Ein Bürstendeckel der eingangs genannten Art ist aus FR 1248501 A bekannt.

Aufgabe der vorliegenden Erfindung ist es, den Bürstendeckel der eingangs genannten Art dahingehend zu verbessern, dass möglichst wenig Vibrationen und Geräusche im Elektromotor entstehen, wobei der Bürstendeckel einfach im Aufbau und günstig in der Herstellung sein soll.

Die Aufgabe wird gelöst durch die Merkmale des unabhängigen Anspruchs 1. Demnach liegt dann eine erfindungsgemäße Lösung der Aufgabe vor, wenn der Bolzen. in einer Aussparung, vorzugsweise einer Bohrung, des Bürstendeckels aufgenommen ist, wobei die Dämpfungshülse zwischen der Wandung der Aussparung des Bürstendeckels und dem Bolzen angeordnet ist. Dadurch wird eine Übertragung von Vibrationen äußerst effektiv und auf einfache Art und Weise verhindert. Die Hülse ist vorzugsweise hohlzylindrisch ausgeführt. Jedoch soll unter dem Begriff Hülse im Rahmen dieser Offenbarung nicht zwangsweise ein zylindrisches Bauelement verstanden werden. Auch andere Formgebungen, insbesondere des Außenumfanges der Hülse, sind denkbar. Vorzugsweise liegt die Hülse über eine gewisse Länge sowohl am Bolzen, als auch an einem äußeren Bauteil, beispielsweise dem Bürstendeckel, formschlüssig an.

. Der erfindungsgemäße Bürstendeckel lässt sich besonders einfach herstellen und bietet eine präzise Lagerung des Bolzens im Bürstendeckel bzw. in der Dämpfungshülse, die zwischen der Aussparung des Bürstendeckels und dem Bolzen angeordnet ist. Die Erfindung bietet auch den Vorteil, dass bestehende Ersatzteilbürsten weiterhin verwendet werden können. Der Bolzen kann an seinem anderen aus dem Bürstendeckel hervorstehenden Ende entweder einstückig mit der Hebelbürste ausgeführt oder in eine Bohrung der Hebelbürste eingepresst sein. Auch kann der Bolzen drehbar in einer Bohrung der Hebelbürste gelagert sein, so dass sich eine zweifache drehbare Lagerung der Hebelbürste ergibt, nämlich einmal zwischen Bolzen und Bürstendeckel, und einmal zwischen Bolzen und Hebelbürste.

Weitere vorteilhafte Ausgestaltungen sind Gegenstand der Unteransprüche. In einer Ausführungsform der vorliegenden Erfindung ist der Bolzen in einer Bohrung der Hebelbürste aufgenommen, wobei die Dämpfungshülse zwischen der Wandung der Bohrung und dem Bolzen angeordnet ist. Dies erlaubt die Nachrüstung bestehender Elektromotoren mit einer Vibrationsdämpfung. Eine derartige Dämpfungshülse eignet sich demnach auch dann, wenn der Bolzen einstückig mit dem Bürstendeckel ausgeführt, nämlich beispielsweise angespritzt, ist. Sie eignet sich auch, wenn der Bolzen in eine Bohrung des Bürstendeckels eingepresst oder in dieser Bohrung drehbar gelagert ist.

Es kann auch vorgesehen sein, dass sowohl zwischen einer Bohrung der Bürste und dem Bolzen als auch zwischen einer Bohrung des Bürstendeckels und dem Bolzen jeweils eine erfindungsgemäße Dämpfungshülse aus einem Elastomer angeordnet ist. So kann durch eine einfache Maßnahme eine sehr starke Dämpfung der Bürstenvibrationen erreicht werden. Bei dieser Ausführungsform ist es auch denkbar, dass sich eine einzige Dämpfungshülse über die gesamte Länge des Bolzens erstreckt, und der Bolzen zusammen mit der Dämpfungshülse sowohl in eine Bohrung der Hebelbürste als auch in eine Bohrung des Bürstendeckels eingesetzt ist. Dadurch kann die Anzahl der benötigten Bauteile reduziert werden.

In einer Ausführungsform der vorliegenden Erfindung ist die Dämpfungshülse als separat hergestelltes Bauteil vorgesehen.

In einer weiteren bevorzugten Ausführungsform der vorliegenden Erfindung umfasst die Dämpfungshülse axiale Formschlusselemente, die mit entsprechenden axialen Formschlusselementen von Bolzen- und/oder Gehäusedeckel bzw. Bolzen und/oder Hebelbürste in Eingriff stehen. Dadurch können die Bauteile gegeneinander in axialer Richtung gegen Verschiebung gesichert werden. Als Formschlusselemente eignen sich vorzugsweise umlaufende radiale Federn und Nuten, die im montierten Zustand ineinander greifen. So kann die Dämpfungshülse vorzugsweise eine oder mehrere umlaufende Rippen bzw. Federn aufweisen, die in entsprechende umlaufende Nuten in der Bohrung von Gehäusedeckel oder Hebelbürste eingreifen. Die umlaufenden Federn können dabei so ausgestaltet sein, dass sie sich aufgrund der Elastizität der Hülse zusammendrücken lassen, so dass die Teile zur Montage des Bürstendeckels ineinander gesteckt werden können. So kann beispielsweise die Dämpfungshülse in eine Bohrung des Bürstendeckels eingesetzt werden, wobei die am Außenumfang der Dämpfungshülse ausgebildeten Rippen bzw. Federn in entsprechende Nuten der Bürstendeckelbohrung einrasten, sobald die Dämpfungshülse vollständig eingesetzt ist. Die umlaufenden radial abstehenden Rippen der Dämpfungshülse können auch an den beiden Stirnseiten der Dämpfungshülse ausgebildet sein, so dass sie nach außen abstehende Flansche bilden, die an der Vorder- und Rückseite des Bürstendeckels anliegen. Zur axialen Sicherung des Bolzens ist dieser vorzugsweise an einer Stelle etwas breiter ausgeführt. So kann beispielsweise auch der Bolzen eine nach außen abstehende umlaufende Rippe bzw. Feder aufweisen.

Die als separates Bauteil bereitgestellte Dämpfungshülse kann auch in die Aussparung des Bürstendeckels bzw. in die Bohrung der Hebelbürste eingeklebt, oder aber auf den Bolzen aufgeklebt sein.

In einer weiteren besonders bevorzugten Ausführungsform der vorliegenden Erfindung weist der Bolzen einen ersten Abschnitt und einen zweiten Abschnitt auf, wobei der erste Abschnitt in der Aussparung des Bürstendeckels, und der zweite Abschnitt in der Bohrung der Hebelbürste gelagert ist, und wobei der Bolzen zwischen erstem und zweitem Abschnitt eine radial abstehende flanschartige Scheibe umfasst. Diese Scheibe übernimmt eine Doppelfunktion. Zum Einen bildet sie eine Beilagscheibe zwischen der Hebelbürste und dem Bürstendeckel bzw. dem Rand der in den Bürstendeckel eingesetzten Dämpfungshülse. Zum Anderen ist der Bolzen durch die abstehende flanschartige Scheibe gegen eine axiale Verschiebung gesichert.

Als besonders vorteilig hat sich herausgestellt, wenn die Härte des Elastromers, aus dem die Dämpfungshülse hergestellt ist, zwischen 70 und 85 Shore A liegt. Bei dieser Materialbeschaffenheit können Vibrationen sehr gut abgedämpft werden, wobei gleichzeitig eine sichere Lagerung des Bolzens gewährleistet bleibt.

*Hier schließt die ursprüngliche Beschreibungsseite 6 an.*

In einer weiteren bevorzugten Ausführungsform der vorliegenden Erfindung handelt es sich bei dem Elastomer um einen Thermoplast. Dadurch kann die erfindungsgemäß vorgesehene Dämpfungshülse einfach hergestellt werden, beispielsweise im Spritzgussverfahren. Alternativ eignen sich als Werkstoffe für die Dämpfungshülse auch Polyurethan, Silikonkautschuk oder ein vulkanisiertes Elastomer.

Eine besonders einfache und kostengünstige Herstellung wird ermöglicht, wenn die Dämpfungshülse im Zwei-Komponenten Spritzgussverfahren in die Aussparung des Bürstendeckels oder in die Bohrung der Hebelbürste eingespritzt ist. Auf diese Art und Weise kann auch der weiter oben erwähnte beidseitige Flansch zur axialen Sicherung der Dämpfungshülse gegen Verschiebung einfach und kostengünstig angespritzt werden. Zudem ist die erfindungsgemäß vorgesehene Dämpfungshülse dann fest mit dem Bürstendeckel oder mit der Hebelbürste verbunden, so dass zur Montage des Bürstendeckels keine zusätzlichen Bauteile bereitgestellt werden müssen, und sich somit eine einfache und schnelle Montage ergibt.

In einer weiteren bevorzugten Ausführungsform der vorliegenden Erfindung kann die Dämpfungshülse auch fest auf den Bolzen aufgebracht sein. Auch hier ergeben sich die gleichen Vorteile bei der Montage. Beispielsweise kann die Dämpfungshülse auf den Bolzen aufvulkanisiert oder aufgespritzt oder auch aufgeklebt sein.

In einer weiteren besonders bevorzugten Ausführungsform der vorliegenden Erfindung weist die Dämpfungshülse eine Wandstärke zwischen 0,3 und 0,7 mm auf. Es hat sich gezeigt, dass bei diesen Wandstärken optimale Vibrationsdämpfung bei relativ geringem Materialaufwand erzielt werden kann.

Die Erfindung stellt ferner einen Elektromotor mit einem erfindungsgemäßen Bürstendeckel bereit. Bei dem Elektromotor kann es sich sowohl um einen permanentmagneterregten Gleichstrommotor als auch um einen elektrisch erregten Gleichstrommotor handeln.

Ein Ausführungsbeispiel der vorliegenden Erfindung wird im Folgenden anhand von Zeichnungen näher erläutert. Es zeigen.
- **Figur 1**:: einen Längsschnitt durch einen Elektromotor mit einem erfindungsgemäßen Bürstendeckel,
- **Figur 2**:: eine Querschnittsdarstellung senkrecht zur Achse des Elektromotors entlang der Schnittlinien II in Figur 1, und
- **Figur 3**:: eine Explosionsdarstellung des Bürstendeckels aus Figur 1.

Für die folgenden Ausführungen gilt, dass gleiche Teile durch gleiche Bezugszeichen bezeichnet sind. Sofern in einer Zeichnung Bezugszeichen enthalten sind, auf die in der zugehörigen Figurenbeschreibung nicht näher eingegangen wird, so wird auf vorhergehende Figurenbeschreibungen Bezug genommen.

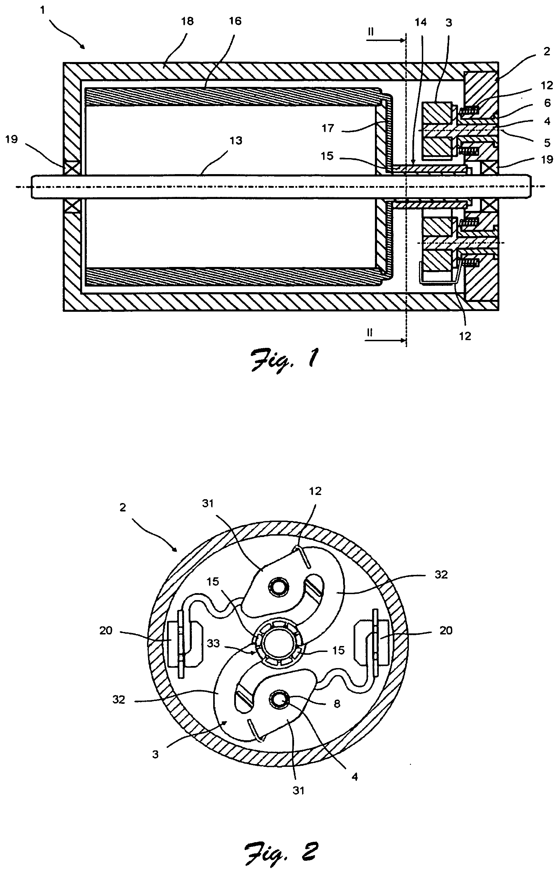

Die Figur 1 zeigt einen Längsschnitt durch einen Elektromotor 1 mit einem erfindungsgemäßen Bürstendeckel 2. Der Elektromotor 1 umfasst ein Gehäuse 18, welches auf der rechten Seite durch den Bürstendeckel 2 abgeschlossen ist. Ferner umfasst der Elektromotor 1 eine Rotorbaugruppe sowie einen Stator, welcher in der Darstellung nicht gezeigt ist. Die Rotorbaugruppe besteht aus der Rotorwelle 13, der koaxial zur Rotorwelle 13 angeordneten hohlzylindrischen Rotorwicklung 16, und dem auf der Rotorwelle 13 befindlichen Kollektor 14. Die Rotorwelle 13 ist im Gehäuse 18 bzw. im Bürstendeckel 2 über entsprechende Kugellager 19 drehbar gelagert. Die Wicklung 16 der Rotorbaugruppe umfasst mehrere Spulen, deren Anschlüsse 17 jeweils elektrisch mit Lamellen 15 des Kollektors 14 verbunden sind.

Wie aus der Schnittdarstellung in Figur 2 ersichtlich ist, umfasst der Bürstendeckel 2 zwei Hebelbürsten 3, die am Bürstendeckel 2 drehbar gelagert sind, und zwar um eine in Figur 1 gezeigte Achse 5, die parallel zur Rotorwelle 13 verläuft. Die beiden Hebelbürsten umfassen jeweils einen Kopfbereich 31 und einen daran anschließenden bogenförmigen Haken 32. Der bogenförmige Haken 32 verläuft in konstantem Radius zur Achse 5, um welche die Hebelbürste 3 drehbar am Bürstendeckel gelagert ist. Wie insbesondere aus Figur 1 hervorgeht, umfasst der Kopfbereich 31 der Hebelbürste eine Bohrung 8, in der ein Lagerbolzen 4 aufgenommen ist, dessen Achse mit der Drehachse 5 übereinstimmt. Die Hebelbürsten 3 sind mittels einer Feder 12 vorgespannt, so dass die freien Enden 33 der bogenförmigen Haken 32 kontinuierlich gegen die Lamellen 15 des Kollektors 14 gedrückt werden. Am Kopfbereich 31 sind die beiden Hebelbürsten elektrisch mit den beiden elektrischen Anschlüssen 20 des Elektromotors 1 verbunden. Bei den beiden Hebelbürsten handelt es sich um Graphitbürsten.

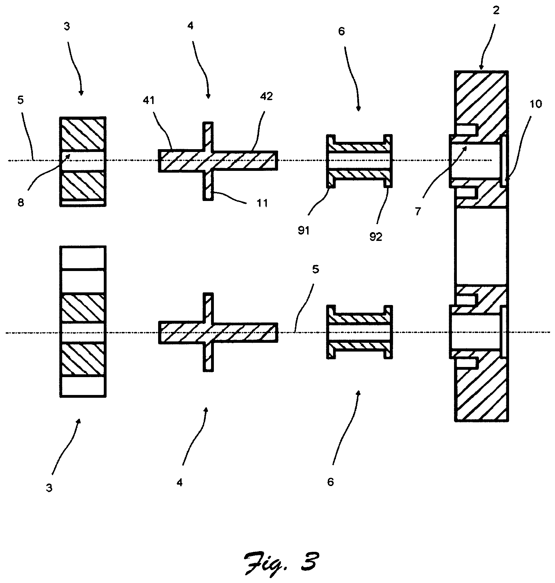

Die genaue Art der Lagerung der Hebelbürsten 3 am Bürstendeckel 2 geht aus den Figuren 1 und 3 hervor. Der Bolzen 4, der zur drehbaren Lagerung der Hebelbürsten dient, umfasst einen ersten Abschnitt 41 und einen zweiten Abschnitt 42. Zwischen erstem Abschnitt 41 und zweitem Abschnitt 42 steht eine flanschartig ausgebildete Scheibe 11 radial von dem Bolzen 4 ab. Während der erste Abschnitt 41 des Bolzens 4 in der Bohrung 8 des Kopfbereichs 31 der Hebelbürste 3 sitzt, ist der zweite Abschnitt 42 des Bolzens 4 in einer Bohrung 7 des Bürstendeckels 2 aufgenommen, wobei zwischen der Wandung der Bohrung 7 und dem zylindrischen zweiten Abschnitt 42 des Bolzens 4 eine Dämpfungshülse aus einem Elastomer angeordnet ist. Die Dämpfungshülse ist in Figur 1 mit dem Bezugszeichen 6 bezeichnet. Wie insbesondere die Figur 3 zeigt, ist die Dämpfungshülse 6 hohlzylindrisch ausgebildet und liegt daher formschlüssig sowohl an der Wandung der Bohrung 7 des Bürstendeckels 2 als auch an dem Außenumfang des zweiten Abschnitts 42 des Bolzens 4 an. An beiden Enden der Dämpfungshülse 6 sind radial nach außen abstehende flanschartige Rippen 91 und 92 ausgebildet, die ein Verrutschen der Dämpfungshülse 6 in Richtung der Längsachse 5 verhindern. Der linke Flansch 91 der Dämpfungshülse 6 liegt formschlüssig an der nach innen gerichteten Seite des Bürstendeckels 2 an. Der in der Darstellung in Figur 1 rechts gezeigte Flansch 92 ist in einer stufenförmigen Nut 10 auf der gegenüberliegenden Seite des Bürstendeckels aufgenommen. Die Dämpfungshülse 6 sorgt dafür, dass Vibrationen, die von dem sich drehenden Kollektor 14 auf die Hebelbürsten 3 und damit auf die mit den Hebelbürsten verbundenen Lagerbolzen 4 übertragen werden, nahezu absorbiert werden, so dass eine weitere Übertragung auf den Bürstendeckel und auf das Gehäuse 18 des Elektromotors nahezu nicht stattfindet.

Die Dämpfungshülse 6 besteht vorzugsweise aus einem thermoplastischen Elastomer und wird bei der Fertigung des Bürstendeckels 2 im Zweikomponenten Spritzgussverfahren in die entsprechende Bohrung 7 des Bürstendeckels eingespritzt. Der Bürstendeckel 2 besteht vorzugsweise aus einem thermoplastischen Kunststoff, so dass ein guter Zusammenhalt zwischen Dämpfungshülse 6 und Bürstendeckel 2 gewährleistet ist.

Wie bereits weiter oben erwähnt wird darauf hingewiesen, dass die Dämpfungshülse auch als separates Bauteil bereitgestellt werden kann. Auch eine Verklebung der Dämpfungshülse mit dem Bürstendeckel ist möglich. Ebenso besteht die Möglichkeit, die Dämpfungshülse fest mit dem Lagerbolzen 4 zu verbinden.

Wie die Figur 1 zeigt, dient die radial nach außen abstehende Scheibe 11 des Lagerbolzens 4 als Beilagscheibe zwischen Hebelbürste und Bürstendeckel bzw. Dämpfungshülse 6. Der linke Flansch 91 der Dämpfungshülse 6 liegt flächig an der Scheibe 11 des Lagerbolzens 4 an. Die Scheibe 11 dient somit auch dazu, den Lagerbolzen 4 in axialer Richtung gegen Verschiebung zu sichern.

## Patentansprüche

1. Bürstendeckel (2) für einen bürstenkommutierten Elektromotor (1), mit zumindest einer Hebelbürste (3), die mittels eines Bolzens (4) drehbar um eine Achse (5) am Bürstendeckel (2) gelagert ist, wobei der Bolzen (4) zumindest abschnittsweise von zumindest einer Dämpfungshülse (6) aus einem Elastomer umgeben ist, **dadurch gekennzeichnet, dass** der Bolzen in einer Aussparung (7), vorzugsweise einer Bohrung, des Bürstendeckels aufgenommen ist, wobei die Dämpfungshülse zwischen der Wandung der Aussparung des Bürstendeckels und dem Bolzen angeordnet ist.

2. Bürstendeckel (2) nach Anspruch 1, **dadurch gekennzeichnet, dass** der Bolzen in einer Bohrung (8) der Hebelbürste aufgenommen ist, wobei die Dämpfungshülse zwischen der Wandung der Bohrung und dem Bolzen angeordnet ist.

3. Bürstendeckel (2) nach einem der Ansprüche 1 bis 2, **dadurch gekennzeichnet, dass** die Dämpfungshülse axiale Formschlusselemente (91, 92) umfasst, die mit entsprechenden axialen Formschlusselementen (10, 11) von Bolzen und/oder Gehäusedeckel bzw. Bolzen und/oder Hebelbürste in Eingriff stehen.

4. Bürstendeckel (2) nach einem der Ansprüche 1 bis 3, **dadurch gekennzeichnet, dass** der Bolzen einen ersten Abschnitt (41) und einen zweiten Abschnitt (42) ausweist, wobei der erste Abschnitt in der Aussparung (7) des Bürstendeckels, und der zweite Abschnitt in der Bohrung (8) der Hebelbürste gelagert ist, und wobei der Bolzen zwischen erstem und zweitem Abschnitt eine radial abstehende flanschartige Scheibe (11) umfasst.

5. Bürstendeckel (2) nach einem der Ansprüche 1 bis 4, **dadurch gekennzeichnet, dass** die Härte des Elastomers zwischen 70 und 85 Shore A liegt.

6. Bürstendeckel (2) nach einem der Ansprüche 1 bis 5, **dadurch gekennzeichnet, dass** das Elastomer ein Thermoplast ist.

7. Bürstendeckel (2) nach einem der Ansprüche 1 bis 6, **dadurch gekennzeichnet, dass** die Dämpfungshülse im Zwei-Komponenten Spritzgussverfahren in die Aussparung des Bürstendeckels oder in die Bohrung der Hebelbürste eingespritzt ist.

8. Bürstendeckel (2) nach einem der Ansprüche 1 bis 6, **dadurch gekennzeichnet, dass** die Dämpfungshülse fest auf den Bolzen aufgebracht ist.

9. Bürstendeckel (2) nach einem der Ansprüche 1 bis 8, **dadurch gekennzeichnet, dass** die Dämpfungshülse eine Wandstärke zwischen 0,3 und 0,7 mm aufweist.

10. Elektromotor (1) mit einem Bürstendeckel (2) nach einem der Ansprüche 1 bis 9.

## Claims

1. Brush cover (2) for a brush-commutated electric motor (1) with at least one lever brush (3) which is mounted rotatably about an axis (5) at the brush cover (2) by means of a bolt (4), the bolt (4) being surrounded, at least in sections, by at least one damping sleeve (6) of an elastomer, **characterized in that** the bolt is received in a recess (7), preferably a bore, of the brush cover, the damping sleeve being disposed between the wall of the recess of the brush cover and the bolt.

2. Brush cover (2) according to claim 1, **characterized in that** the bolt is received in a bore (8) of the lever brush, the damping sleeve being disposed between the wall of the bore and the bolt.

3. Brush cover (2) according to one of claims 1 to 2, **characterized in that** the damping sleeve comprises axial positive locking elements (91, 92) which are engaged with corresponding axial positive locking elements (10, 11) of the bolt and/or housing cover or the bolt and/or lever brush.

4. Brush cover (2) according to one of claims 1 to 3, **characterized in that** the bolt comprises a first section (41) and a second section (42), the first section being mounted in the recess (7) of the brush cover and the second section being mounted in the bore (8) of the lever brush, and the bolt comprising, between the first and the second sections, a radially projecting flange-like disk (11).

5. Brush cover (2) according to one of claims 1 to 4, **characterized in that** the hardness of the elastomer is between 70 and 85 Shore A.

6. Brush cover (2) according to one of claims 1 to 5, **characterized in that** the elastomer is a thermoplastic.

7. Brush cover (2) according to one of claims 1 to 6, **characterized in that** the damping sleeve is injected into the recess of the brush cover or into the bore of the lever brush by a two-component injection molding process.

8. Brush cover (2) according to one of claims 1 to 6, **characterized in that** the damping sleeve is firmly attached to the bolt.

9. Brush cover (2) according to one of claims 1 to 8, **characterized in that** the damping sleeve has a wall thickness between 0.3 and 0.7 mm.

10. Electric motor (1) with a brush cover (2) according to one of claims 1 to 9.

## Revendications

1. Couvercle porte-balais (2) destiné à un moteur électrique (1) à commutation par balais, comprenant au moins un balai à levier (3), qui est monté sur le couvercle porte-balais (2) de manière rotative autour d'un axe (5) au moyen d'une broche (4), la broche (4) étant entourée, au moins en partie, par au moins une douille d'amortissement (6) en un élastomère, **caractérisé en ce que** la broche est reçue dans un évidement (7), de préférence un alésage, du couvercle porte-balais, la douille d'amortissement étant agencée entre la paroi de l'évidement du couvercle porte-balais et la broche.

2. Couvercle porte-balais (2) selon la revendication 1, **caractérisé en ce que** la broche est reçue dans un alésage (8) du balai à levier, la douille d'amortissement étant agencée entre la paroi de l'alésage et la broche.

3. Couvercle porte-balais (2) selon l'une des revendications 1 à 2, **caractérisé en ce que** la douille d'amortissement comporte des éléments de complémentarité de formes (91, 92) axiaux, qui sont en prise avec des éléments de complémentarité de formes (10, 11) axiaux correspondants de la broche et/ou du couvercle de boitier, respectivement de la broche et/ou du balai à levier.

4. Couvercle porte-balais (2) selon l'une des revendications 1 à 3, **caractérisé en ce que** la broche présente un premier tronçon (41) et un deuxième tronçon (42), le premier tronçon étant monté dans l'évidement (7) du couvercle porte-balais, et le deuxième tronçon dans l'alésage (8) du balai à levier, et la broche comportant entre le premier et le deuxième tronçon, un disque (11) en saillie radiale à la manière d'un flasque.

5. Couvercle porte-balais (2) selon l'une des revendications 1 à 4, **caractérisé en ce que** la dureté de l'élastomère se situe entre 70 et 85 Shore.

6. Couvercle porte-balais (2) selon l'une des revendications 1 à 5, **caractérisé en ce que** l'élastomère est un thermoplastique.

7. Couvercle porte-balais (2) selon l'une des revendications 1 à 6, **caractérisé en ce que** la douille d'amortissement est injectée selon un procédé de moulage par injection bi-composant, dans l'évidement du couvercle porte-balais ou dans l'alésage du balai à levier.

8. Couvercle porte-balais (2) selon l'une des revendications 1 à 6, **caractérisé en ce que** la douille d'amortissement est rapportée de manière fixe sur la broche.

9. Couvercle porte-balais (2) selon l'une des revendications 1 à 8, **caractérisé en ce que** la douille d'amortissement présente une épaisseur de paroi entre 0,3 et 0,7 mm.

10. Moteur électrique (1) comprenant un couvercle porte-balais (2) selon l'une des revendications 1 à 9.
